**Europäisches Patentamt**

**European Patent Office**

**Office européen des brevets**

(11) Veröffentlichungsnummer: **0 352 254**
**A2**

## (12) EUROPÄISCHE PATENTANMELDUNG

(21) Anmeldenummer: **89890196.2**

(22) Anmeldetag: **20.07.89**

(51) Int. Cl.5: **C 21 C 7/00**
**C 21 C 7/072**

(30) Priorität: **22.07.88 AT 1882/88**

(43) Veröffentlichungstag der Anmeldung:
**24.01.90 Patentblatt 90/04**

(84) Benannte Vertragsstaaten:
**AT BE CH DE ES FR GB GR IT LI LU NL SE**

(71) Anmelder: **VOEST-ALPINE STAHL DONAWITZ GESELLSCHAFT M.B.H.**
**Pestalozzistrasse 128 Postfach 1**
**A-8700 Leoben-Donawitz (AT)**

(72) Erfinder: **Pochmarski, Luzian, Dipl.-Ing.**
**Roseggerstrasse 27**
**A-8700 Leoben (AT)**

**Köller, Otto, Dipl.-Ing.**
**Kerpelystrasse 83**
**A-8704 Leoben (AT)**

(74) Vertreter: **Kretschmer, Adolf, Dipl.-Ing. et al**
**Patentanwälte Dipl.Ing. A. Kretschmer Dr. Thomas M.**
**Haffner Schottengasse 3a**
**A-1014 Wien (AT)**

(54) **Verfahren zum Erwärmen von Stahlschmelzen sowie Einrichtung zur Durchführung dieses Verfahrens.**

(57) Bei einem Verfahren zum Erwärmen von Stahlschmelzen (10) in einer Pfanne (5), welche Schmelzen mit eisenoxidreicher Schlacke (8) bedeckt sind, insbesondere für kontinuierliche Stahlerzeugungsprozesse, wie Z.B. das KVA-Verfahren, unter Verwendung metallothermischer Wärme wird während des Füllens der Pfanne (5) ein exotherm mit dem Badsauerstoff und dem Schlackensauerstoff reagierendes Metall, wie Z.B. Al, Si, deren Gemische oder Legierungen, insbesondere FeSi, sowie gegebenenfalls pulverförmige Schlackenbildner, wie z.B. CaO, $Al_2O_3$, MgO und/oder $SiO_2$ über Düsen (14) im Boden (12) der Auffangpfanne (5) für das Bad/Schlackengemisch mit einem Inertgas eingeblasen.

EP 0 352 254 A2

## Beschreibung

### Verfahren zum Erwärmen von Stahlschmelzen sowie Einrichtung zur Durchführung dieses Verfahrens

Die Erfindung bezieht sich auf ein Verfahren zum Erwärmen von Stahlschmelzen in einer Pfanne, welche Schmelzen mit eisenoxidreicher Schlacke bedeckt sind, insbesondere für kontinuierliche Stahlerzeugungsprozesse, wie z.B. das KVA-Verfahren, unter Verwendung metallothermischer Wärme, sowie auf eine Einrichtung zur Durchführung dieses Verfahrens.

Es ist bekannt, daß Materialien, welche mit dem Sauerstoff in einem Metallbad reagieren, zur Desoxidation verwendet werden können, und es ist weiters bekannt, daß bei einer derartigen Desoxidation eine Erwärmung des Bades stattfindet, da die Oxidation des eingebrachten Materials zusätzliche Wärme freisetzt. Die entstehende Wärme ist hiebei nicht auf die Reaktionswärme des eingebrachten Materials mit im Bad gelösten Sauerstoff beschränkt, sondern besteht zumindest teilweise auch aus der Lösungswärme des eingebrachten Materials im Metallbad. Zur Desoxidation werden üblicherweise mit Sauerstoff reagierende Metalle, wie beispielsweise Aluminium oder Silicium oder aber Erdalkalien, verwendet. Insbesondere bei kontinuierlich arbeitenden Stahlerzeugungsprozessen, wie beispielsweise dem KVA-Verfahren, fließt eine nur wenig über Liquidus erhitzte Schmelze gemeinsam mit einer eisenoxidhältigen Schlacke in ein Auffanggefäß und die Erwärmung des Schmelzbades könnte insbesondere dadurch verbessert werden, daß auch der in der Schlacke enthaltene Sauerstoff für metallothermische Prozesse ausgenützt wird. Nachteilig bei einer derartigen Vorgangsweise ist jedoch eine Überhitzung der Schlacke, und Desoxidationen, welche durch Zusätze von metallothermisch reagierenden Stoffen zur Schlacke durchgeführt werden, haben auf Grund der Nebenreaktionen in der flüssigen Schlacke nur eine ungenügende Erwärmung des Bades zur Folge.

Die Erfindung zielt nun darauf ab, ein Verfahren zu schaffen, mit welchem eine wirksame Erwärmung des Schmelzbades bei gleichzeitiger Desoxidation desselben erzielt werden kann, ohne daß hiebei die Phasengrenzfläche zwischen Bad und Schlacke zerstört wird, und bei welchem eine Überhitzung der Schlacke vermieden werden kann, so daß das Abtrennen der Schlacke nicht beeinträchtigt wird. Zur Lösung dieser Aufgabe besteht das erfindungsgemäße Verfahren im wesentlichen darin, daß während des Füllens der Pfanne ein exotherm mit dem Badsauerstoff und dem Schlackensauerstoff reagierendes Metall, wie z.B. Al, Si, deren Gemische oder Legierungen, insbesondere FeSi, sowie gegebenenfalls pulverförmige Schlackenbildner, wie z.B. CaO, $Al_2O_3$, MgO und/oder $SiO_2$ über Düsen im Boden der Auffangpfanne für das Bad/Schlackengemisch mit einem Inertgas eingeblasen wird (werden). Derartige exotherm mit dem Badsauerstoff und dem Schlackensauerstoff reagierende Metalle können als pulverförmiges Gemisch eingebracht werden, und es kommen in der Regel Aluminium und Silicium, sowie deren Gemische oder Legierungen für eine derartige exotherme Reaktion in Frage. Dadurch, daß derartige metallothermisch reagierende Materialien mit Inertgas über Düsen im Boden einer Auffangpfanne eingeblasen werden, wird gleichzeitig eine gute Verteilung der exotherm reagierenden Stoffe im Bad sichergestellt, und es wird eine homogene Baderwärmung erzielt. Die exotherme Reaktion durch das Einblasen metallothermisch wirkender Stoffe läuft hiebei an der Kontaktfläche Bad/Schlacke ab und es wird dort Wärme freigesetzt, wobei für diese exotherme Reaktion mit Vorteil große Mengen an exotherm wirkenden Feststoffen eingeblasen werden. Dadurch, daß das Einblasen durch eine Bodendüse erfolgt und nicht durch Bodensteine mit gerichteten Durchgängen, können größere Körnungen der Einblasstoffe eingesetzt werden, um die erforderliche Menge in der zur Verfügung stehenden Pfannenfüllzeit einzublasen. Wesentlich für die gewünschte Erwärmung an der Kontaktfläche Bad/Schlacke ist hiebei eine eisenoxidreiche Schlacke und die Verwendung von Inertgas zum Einblasen der metallothermisch reagierenden Stoffe, wodurch Reaktionen im Bad weitgehend vermieden werden. Auf Grund der Erwärmung des Bades wird die Schmelze höher über Liquidus erhitzt, und es wird eine stabile Phasengrenze zwischen Schlacke und Bad ausgebildet, welche das Abtrennen der Schlacke erleichtert. Derartige metallothermisch reagierende Gemische können gemeinsam mit pulverförmigen Schlackenbildnern, wie beispielsweise CaO, $Al_2O_3$, MgO und $SiO_2$ oder deren Gemischen, eingebracht werden, so daß eine gute Schlackenbildung gewährleistet wird, und die Strahlenergie des durch den Boden der Auffangpfanne eingeblasenen Inertgases kann so eingestellt werden, daß eine homogene Wärmeverteilung der exothermen Reaktion in dem Bad sichergestellt ist und gleichzeitig eine Durchmischung von Bad und Schlacke in demjenigen Ausmaß eingestellt wird, daß die Reaktion des im Bad gelösten Siliciums mit FeO der Schlacke oder exothermer Wärmeentwicklung zur weiteren Erwärmung der Schmelze herangezogen werden kann. Ein großer Teil der Wärmeübertragung entsteht somit an der Phasengrenzschicht selbst, u.zw. in der Zwischenschicht zwischen Stahl und Schlacke, und die in dieser Schicht entstehende Wärme kann in hohem Maße an das darunterliegende Bad abgegeben werden. Zusätzlich zu den metallothermischen Reaktionen wird die Lösungswärme ausgenützt und durch Reaktion mit dem im Stahlbad gelösten Sauerstoff kann eine Desoxidation erreicht werden.

Um die thermische Energie der im Bad und in der Grenzschicht zwischen Bad und Schlacke ablaufenden Reaktionen optimal zu nutzen, wird mit Vorteil so vorgegangen, daß 0,1 bis 2 Gew.-%, insbesondere 0,5 bis 2 Gew.-%, metallothermisch wirkende Stoffe in 20 bis 100% der Pfannenfüllzeit über den Pfannenboden eingeblasen werden. Das Einblasen von Inertgas mit den metallothermisch reagierenden Stoffe kann bei pneumatischer Förderung einfach durch Verschließen der Einblasdüsen gestoppt werden, wobei eine gleichmäßige Verteilung und eine homogene Erwärmung durch zusätzliches weiteres Blasen mit Inertgas, ohne Zusatz von metallothermisch wirkenden Stoffen aufrechterhalten werden kann. Beim Einblasen der metallothermisch wirkenden Stoffe in 20 bis 100% der Pfannenfüllzeit wird dabei so vorgegangen, daß abhängig von der geplanten Wärmesteigerung in dieser Zeit höhere oder niedrigere Einblasraten verwendet werden. Derart wird, wie von oben in die Auffangpfanne des Metall/Schlacke-Gemisch zuläuft, die Einblasrate auf die in der Zeiteinheit zulaufende Menge und damit auf die vorhandene Menge an FeO der Schlacke abgestimmt, um eine ständig ablaufende, nicht heftige Reaktion zu erzielen. Mit Vorteil wird hiebei so vorgegangen, daß während des Einblasens der metallothermisch wirkenden Stoffe die Inertgasmenge zwischen 5 und 30 l Inertgas/kg einzublasender Feststoff eingestellt wird. Die Variation der Inertgasmenge je kg einzublasenden Feststoff dient hiebei in erster Linie dazu, um unterschiedliche Spülenergien im Verlaufe der Pfannenfüllung und dem damit ansteigenden Badspiegel einzustellen. Die Einstellung der metallothermisch wirkenden Stoffe in dem bevorzugten Bereich von 0,1 bis 2 Gew.-%, insbesondere 0,5 bis 2 Gew.-%, stellt sicher, daß zu hohe Silicium- oder Aluminiumgehalte im Stahl vermieden werden, wobei die Verwendung von Silicium gemeinsam mit der Desoxidation des Bades zur Folge hat, daß ein Auftreten von unerwünschten Kochreaktionen an der Phasengrenze Bad/Schlacke über eine CO-Bildung vermieden wird. Die über dem Schmelzbad und der Phasengrenzschicht zwischen Bad und Schmelze verbleibende Schlackenschicht bleibt somit in Ruhe und wirkt als thermische Isolierung gegen Abstrahlverluste der im Bad und an der Phasengrenze ablaufenden exothermen Reaktionen.

Die erfindungsgemäße Vorrichtung zur Durchführung dieses Verfahrens mit einer wenigstens eine Bodendüse aufweisenden Pfanne ist im wesentlichen dadurch gekennzeichnet, daß wenigstens eine Bodendüse mit einer pneumatischen Fördereinrichtung für metallothermisch wirkende Stoffe verbunden ist. Um eine gute Spülwirkung mit einer geschlossenen Bad umlaufströmung zu erzielen, hat es sich hiebei als besonders vorteilhaft erwiesen, die Spülelemente auf einem Kreis anzuordnen, wobei die Ausbildung mit Vorzug so getroffen ist, daß eine Mehrzahl von Bodendüsen in Abstand von der Pfannenwand vorgesehen ist, welche konzentrisch zur Pfannenwand auf einem Durchmesser angeordnet sind, welcher zwischen 50 und 75% des Pfannendurchmessers betr-gt. Eine optimale Durchmischung und damit eine homogene Baderwärmung kann dadurch erreicht werden, daß die Bodendüsen äquidistant am Umfang der Hüllkurve angeordnet sind und daß für jede an die pneumatische Fördereinrichtung angeschlossene Bodendüse ein bis drei mit Inertgas beaufschlagte Bodendüsen vorgesehen sind, wobei bei Verwendung von 1 bis 3 Spülelementen auf dem selben Radius wie das Einblaselement in der Phase, in welcher der Einblasvorgang abgebrochen oder unterbrochen wird, eine weitere Umlaufströmung und damit Verteilung der entstandenen Reaktionswärme sichergestellt wird. Mit Vorteil liegen die Spülelemente bzw. -düsen innerhalb von zwei Dritteln des Pfannenbodenradius, vom Zentrum des Pfannenbodens gerechnet. Die Einstellung der gewünschten Intertgasmenge bzw. die Unterbrechung des Einblasvorganges kann durch entsprechende Drossel- bzw. Absperrorgane in den jeweiligen Blasleitungen vorgenommen werden.

Durch die an der Phasengrenze ablaufenden Reaktionen mit dem FeO-Gehalt der Schlacke wird neben einer Verbesserung der wirksamen Erwärmung auch das Eisenausbringen durch Reduktion eines Anteiles des Schlackeneisenoxides zu Eisen verbessert und eine Verminderung des Angriffs von Eisenoxid auf das Feuerfestmaterial der Pfanne bewirkt. Bei Verwendung von Silicium erfolgt diese Reduktion von Eisenoxiden unter gleichzeitiger Abnahme des im Stahlbad gelösten Siliciums, so daß der geforderte Maximalgehalt des Bades an Silicium durch entsprechende Einstellung der Strahlenergie und damit der Dicke der Phasengrenzschicht zwischen Bad und Schlacke, welche an der Reaktion teilnimmt, eingestellt werden kann. Gleichzeitig kann aber während der Reaktionen ein ausreichend hoher Siliciumgehalt im Stahlbad sichergestellt werden, welcher neben einer Desoxidation unerwünschte Kochreaktionen an der Phasengrenze zu vermeiden hilft.

Durch das Einblasen derartiger metallothermisch reagierender Materialien von unten lassen sich die oben erwähnten Parameter in einfacher Weise einstellen und an die jeweilige Füllhöhe der Pfanne anpassen.

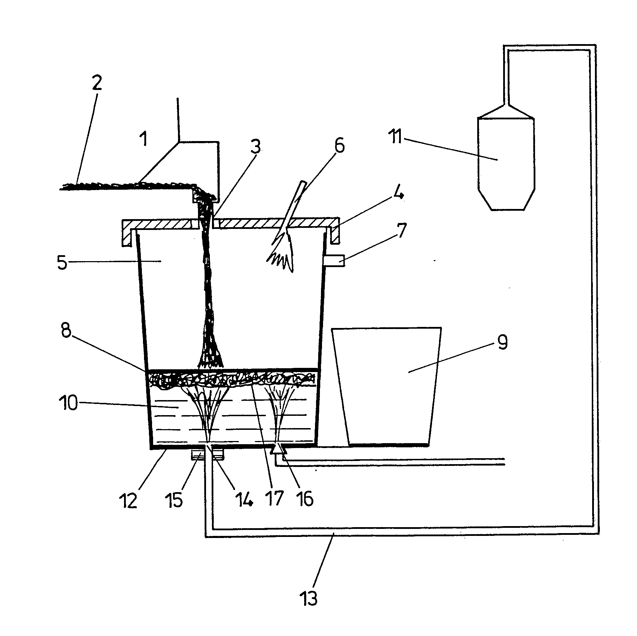

Die Erfindung wird nachfolgend an Hand eines in der Zeichnung schematisch dargestellten Ausführungsbeispieles einer Einrichtung zur Durchführung des Verfahrens näher erläutert.

In der Zeichnung ist ein Schmelzgefäß schematisch mit 1 angedeutet, aus welchem Metall/Schlakkegemisch 2 kontinuierlich über eine Absticheinheit 3 in eine hoch aufgeheizte, mit einem Deckel 4 versehene Auffangpfanne 5 abläuft. Der Deckel 4 ist mit einem Deckelbrenner 6 versehen, um auch während des Abstiches die Pfanne auf ausreichend hohe Temperaturen beheizen zu können. Die Auffangpfanne 5 verfügt weiters über eine Schlackenabflußöffnung 7, durch welche die aufschwimmende Schlacke 8 bei Erreichen der Abflußöffnung 7 durch Verdrängung in einen Schlackenkübel 9 abfließt. Sobald der Stahlspiegel 10 die Abflußöffnung 7 erreicht, muß die Auffangpfanne 5 gegen eine neue getauscht werden, wobei gleichzeitig auch der Schlackenkübel 9 gegen einen neuen getauscht wird.

Um den Stahl ausreichend zu erhitzen, wird von einer pneumatischen Förderanlage 11 ein pulverförmiges Gemisch aus exotherm mit dem Badsauerstoff und dem Schlackensauerstoff reagierendem Metall, eventuell gemeinsam mit den pulverförmigen Schlackenbildnern, über den Boden 12 der Auffangpfanne in das Stahlbad 10 eingeblasen. Die pulverförmigen Gemische aus mit dem Bad- bzw. Schlakkensauerstoff reagierendem Metall, wie z.B. Aluminium oder Silicium, werden aus der pneumatischen Förderanlage 11 über eine Zuführungsleitung 13 über eine Einblasöffnung 14 über den Pfannenboden eingeblasen. Die Einblasöffnung 14 ist hiebei in vorteilhafter Weise mit einem Schieberverschluß versehen, welcher schematisch mit 15 angedeutet ist, um den Einblasvorgang der metallothermisch reagierenden Metalle jederzeit unterbrechen zu können. In dem Pfannenboden 12 sind, um eine bessere Durchmischung des Stahlbades und damit einen optimalen Ablauf der metallothermischen Reaktionen zu ermöglichen, schematisch mit 16 angedeutete Spülelemente für Inertgas vorgesehen. Die Spülelemente 16 werden hiebei vorzugsweise auf dem selben Radius wie die Einblasöffnung 14 angeordnet, um die Rührintensität der Bad/Schlak-kenreaktion weiter zu verbessern.

Es ist ebenso möglich, neben dem Einblaselement 14 für die exotherm mit dem Bad- und dem Schlackensauerstoff reagierenden Metalle mehrere Spülelemente 16 am Boden 12 der Auffangpfanne 5 vorzusehen, wodurch eine bessere Verteilung der exotherm reagierenden Stoffe in dem Bad gewährleistet wird und somit eine homogenere Baderwärmung sichergestellt werden kann. Durch die Einstellung der durch die Einblasöffnungen 16 zugeführten Inertgasmenge kann die Durchmischung von Bad und Schlacke in demjenigen Ausmaß eingestellt werden, um die Reaktion des im Bad gelösten Siliciums mit dem Eisenoxid der Schlacke räumlich begrenzt an der Phasengrenzfläche 17 zwischen Schlacke 8 und Stahlschmelze 10 ablaufen zu lassen, so daß die hiebei gebildete Wärme zum größten Teil in die darunterliegende Stahlschmelze 10 abgegeben wird. Die Schlackenschichte 8 wirkt hiebei als Isolierschichte gegen Abstrahlverluste nach oben.

## Patentansprüche

1. Verfahren zum Erwärmen von Stahlschmelzen (10) in einer Pfanne (5), welche Schmelzen mit eisenoxidreicher Schlacke (8) bedeckt sind, insbesondere für kontinuierliche Stahlerzeugungsprozesse, wie z.B. das KVA-Verfahren, unter Verwendung metallothermischer Wärme, dadurch gekennzeichnet, daß während des Füllens der Pfanne (5) ein exotherm mit dem Badsauerstoff und dem Schlackensauerstoff reagierendes Metall, wie z.B. Al, Si, deren Gemische oder Legierungen, insbesondere Fe-Si, sowie gegebenenfalls pulverförmige Schlak-kenbildner, wie Z.B. CaO, $Al_2O_3$, MgO und/oder $SiO_2$ über Düsen (14,16) im Boden (12) der Auffangpfanne (5) für das Bad/Schlackengemisch mit einem Inertgas eingeblasen wird (werden).

2. Verfahren nach Anspruch 1, dadurch gekennzeichnet, daß 0,1 bis 2 Gew.-%, insbesondere 0,5 bis 2 Gew.-%, metallothermisch wirkende Stoffe in 20 bis 100% der Pfannenfüllzeit über den Pfannenboden (12) eingeblasen werden.

3. Verfahren nach Anspruch 1 oder 2, dadurch gekennzeichnet, daß die Inertgasmenge zwischen 5 und 30 l Inertgas/kg einzublasender Feststoff eingestellt wird.

4. Einrichtung zur Durchführung des Verfahrens nach einem der Ansprüche 1, 2 oder 3, mit einer wenigstens eine Bodendüse aufweisenden Pfanne (5), dadurch gekennzeichnet, daß wenigstens eine Bodendüse (14) mit einer pneumatischen Fördereinrichtung (11) für metallothermisch wirkende Stoffe verbunden ist.

5. Einrichtung nach Anspruch 4, dadurch gekennzeichnet, daß eine Mehrzahl von Bodendüsen (14,16) in Abstand von der Pfannenwand vorgesehen ist, welche konzentrisch zur Pfannenwand auf einem Durchmesser angeordnet sind, welcher zwischen 50 und 75% des Pfannendurchmessers beträgt.

6. Einrichtung nach Anspruch 5, dadurch gekennzeichnet, daß die Bodendüsen (14,16) äquidistant am Umfang der Hüll kurve angeordnet sind und daß für jede an die pneumatische Fördereinrichtung (11) angeschlossene Bodendüse (14) ein bis drei mit Inertgas beaufschlagte Bodendüsen (16) vorgesehen sind.